# EUROPEAN PATENT APPLICATION

(11) **EP 4 800 942 A1**
(43) Date of publication of application: **02.09.2026**
(21) Application number: 26158456.9
(22) Date of filing: 13.02.2026
(51) Int. Cl.: H04B 10/29, G02B 6/26, G02F 1/00, H04B 10/40

(54) **OPTICAL TRANSCEIVERS WITH FIBER CONNECTION FROM BOTH SIDES**

(30) Priority: 28.02.2025 US 202563765354 P; 12.12.2025 US 202519418882
(71) Applicant: Cisco Technology, Inc., San Jose, CA 95134-1706 (US)
(72) Inventor: Givehchi, Mehrdad, San Jose, 95134-1706 (US); Liu, Fenghai, San Jose, 95134-1706 (US); Mikkelsen, Benny, San Jose, 95134-1706 (US); Nowell, Mark C., San Jose, 95134-1706 (US)
(74) Representative: Noble, Nicholas

(57) **Abstract**

An optical module that includes two or more optical connection ports for transmitting optical signals to and from the optical module. The optical module receives a first optical signal through a first optical connection port and transmits a second optical signal through a second optical connection port. The second optical signal is generated based on a modulator in the optical module receiving an electrical signal from a DSP in the optical module.

## Description

### TECHNICAL FIELD

Embodiments presented in this disclosure generally relate to an optical transceiver. More specifically, embodiments disclosed herein relate to an optical transceiver with an optical fiber connection on both sides of the optical transceiver.

### BACKGROUND

Pluggable optical transceivers, which are removable modules designed to be inserted into a host system, often utilize one side of the optical transceiver for an optical connection and the opposite side for electrical connections (such as for high-speed input/outputs (I/Os), management interface, and power supply connections). The pluggable optical transceivers are typically configured such that one optical transceiver receives an optical signal and outputs electrical signals, while another optical transceiver receives the electrical signals and outputs a new optical signal. Each of the optical transceivers includes a digital signal processor (DSP) to convert an optical signal received on the optical connection into electrical signals.

### BRIEF DESCRIPTION OF THE DRAWINGS

So that the manner in which the above-recited features of the present disclosure can be understood in detail, a more particular description of the disclosure, briefly summarized above, may be had by reference to embodiments, some of which are illustrated in the appended drawings. It is to be noted, however, that the appended drawings illustrate typical embodiments and are therefore not to be considered limiting; other equally effective embodiments are contemplated.
Figure 1A depicts a block diagram of an optical module with multiple optical connection ports to receive and transmit optical signals, according to one embodiment.
Figure 1B depicts a diagram of an optical module with one PIC for converting optical signals between different modulation schemes, according to one embodiment.
Figure 2 depicts a flowchart of an exemplary method for converting a first optical signal with a first modulation scheme to a second optical signal with a second modulation scheme, according to one embodiment.
Figure 3 depicts a diagram of an optical module with multiple optical connection ports, according to one embodiment.
Figure 4 depicts a diagram of a chassis that includes multiple optical modules that receive and transmit optical signals, according to one embodiment.

To facilitate understanding, identical reference numerals have been used, where possible, to designate identical elements that are common to the figures. It is contemplated that elements disclosed in one embodiment may be beneficially used in other embodiments without specific recitation.

### DESCRIPTION OF EXAMPLE EMBODIMENTS

### OVERVIEW

One embodiment presented in this disclosure is an optical module that includes a first optical connection port, on a first side of the optical module, configured to receive a first optical signal with a first modulation scheme. The optical module further includes a photodiode configured to convert the first optical signal into first electrical signals. The optical module further includes a DSP configured to convert the first electrical signals into second electrical signals for a second optical signal with a second modulation scheme that is different from the first modulation scheme. The optical module further includes a modulator configured to generate the second optical signal based on the second electrical signals and a second optical connection port, on a second side of the optical module, configured to transmit the second optical signal with the first side of the optical module being opposite the second side of the optical module. Additional embodiments may include a chassis and a method.

### EXAMPLE EMBODIMENTS

The present disclosure describes an optical module that can receive optical signals from a first optical connection port and transmit optical signals through a second optical connection port that is different from the first optical connection port. In various embodiments, the optical module described herein may function as an optical media converter, such as those designated as 800ZR+, 1.6TZR, or 1.6TZR+ optical media converters, which are designed to convert optical signals between different modulation schemes and/or optical interfaces. Furthermore, the optical module, particularly when configured as a media converter, is adapted to be plugged into a switch or router system to interface with co-packaged optics (CPO), thereby providing flexible and efficient optical connectivity in high-density systems. As optical signals travel long distances through optical cables, the optical signals may lose quality or signal strength. The rate at which the optical signal degrades varies based on the modulation scheme of the optical signal. For instance, an optical signal with a short-range modulation scheme, including but not limited to Pulse Amplitude Modulation 4-level (PAM-4), may degrade faster than a long-range modulation scheme, including but not limited to 16-level Quadrature Amplitude Modulation (16-QAM). As such, an optical signal may be converted from a short-range modulation scheme to a long-range modulation scheme when the destination for the optical signal is far from the origin of the optical signal. In some instances, the optical module includes a first optical connection port that receives a first optical signal from a first location (such as a data center). The optical module may include a first photonic integrated circuit (PIC) with a photodiode that converts the first optical signal into electrical signals. The optical module may include a DSP that modifies the electrical signals by reamplifying, reshaping, retiming the electrical signals, or generating electrical signals for modulating an optical signal using a modulation scheme that is different from the first modulation scheme. The DSP may use the modified electrical signals to drive a modulator in a second PIC in the optical module, along with a first laser (or multiple lasers) in the optical module, to generate a second optical signal based on the modified electrical signals. The second optical signal may be a different modulation scheme from the first optical signal. For example, the first optical signal (which may have a PAM-4 modulation scheme) is converted into the second optical signal with a 16-QAM modulation scheme. The second optical signal may be transmitted out of the optical module to a second location (such as another data center) through a second optical connection port. In some instances, the first optical connection port is on an opposite side of the optical module from the second optical connection port.

The optical module may include optical connection ports for transmitting optical signals from the second location to the first location. For example, the optical module may include a third optical connection port that receives a third optical signal from the second location. The second PIC in the optical module may include a photodiode that converts the third optical signal into electrical signals. The DSP may modify the electrical signals and drive a modulator in the first PIC, along with a second laser (or multiple lasers) in the optical module, to generate a fourth optical signal based on the modified electrical signals. The fourth optical signal may have a different modulation scheme from the third optical signal. For example, the third optical signal (which may have a 16-QAM modulation scheme) is converted into the fourth optical signal with a PAM-4 modulation scheme. The fourth optical signal may be transmitted out of the optical module to the first location through a fourth optical connection port. In some instances, the third optical connection port is on an opposite side of the optical module from the fourth optical connection port.

In some instances, the optical module includes one PIC with multiple photodiodes and modulators. For example, the optical module may receive a first optical signal from a first location through a first optical connection port. The first optical signal is transmitted to a first photodiode on the PIC to be converted into electrical signals. A DSP on the PIC modifies the electrical signals by reamplifying, reshaping, retiming the electrical signals, or modifying grouping of bits represented by the electrical signals. The DSP may use the modified electrical signals to drive a first modulator on the PIC, along with lasers in the optical module, to generate the second optical signal. The second optical signal may be transmitted out of the optical module to a second location through a second optical connection port. A third optical connection port on the optical module may receive a third optical signal from the second location. The third optical signal may be transmitted to a second photodiode that converts the third optical signal into electrical signals. The DSP may modify the electrical signals and drive a second modulator in the PIC, along with the lasers in the optical module, to generate a fourth optical signal based on the modified electrical signals. The fourth optical signal may be transmitted out of the optical module to the first location through a fourth optical connection port. The first optical signal may have a different modulation scheme from the second optical signal, and the third optical signal may have a different modulation scheme from the fourth optical signal. Each of the optical connection ports may be separate ports.

In some instances, the optical module is one of multiple optical modules housed within a chassis, which is a structural frame designed to hold electronic components. The chassis may include a multiplexer (MUX) for combining multiple signals, a demultiplexer (DEMUX) for splitting a combined signal, and an I/O port. The chassis may receive an optical signal through the I/O port and split the optical signal into multiple optical signals using the DEMUX. Each of the multiple optical signals may go to a different one of the multiple optical modules. Each of the multiple optical modules may convert the optical signal from a first modulation scheme to a second modulation scheme, as described above, and transmit a new optical signal out of the optical module through a first optical connection port. Each of the multiple optical modules may receive a second optical signal through a second optical connection port on the respective optical modules. Each of the multiple optical modules may convert the second optical signal into a third optical signal with a different modulation scheme and transmit the third optical signal to the MUX. When operating a plurality of optical modules within a chassis, the generating step for each optical module produces an optical signal at a wavelength distinct from the optical signals generated by other optical modules in the plurality of optical modules allowing the MUX to combine these wavelength-division multiplexed signals into a single combined optical signal that is transmitted to the I/O port to be transmitted out of the chassis.

In some embodiments, the systems provide several technical advantages. For example, by having optical connection ports on opposite sides of the optical module, the optical module may receive and transmit optical signals more efficiently. The optical signals that enter the optical module may be converted into new optical signals and transmitted out of the optical module without the new optical signals going back to the side the optical signals came from, which may save energy. This dual-sided optical connection arrangement inherently simplifies the internal module design by allowing optical signals to follow a more natural and direct path from one side of the module to the other. This direct signal flow minimizes complex internal routing, reduces potential signal integrity issues, and contributes to a more compact and efficient module architecture. Beyond efficiency, providing optical connections on both sides of the module offers substantial benefits for installation and maintenance. This configuration enables greater flexibility in fiber routing, allowing client-side and line-side optical fibers to be managed and accessed independently from different sides of the host system. This separation simplifies cable management, reduces congestion, and significantly eases technician efforts during initial installation, upgrades, and troubleshooting, leading to improved operational efficiency.

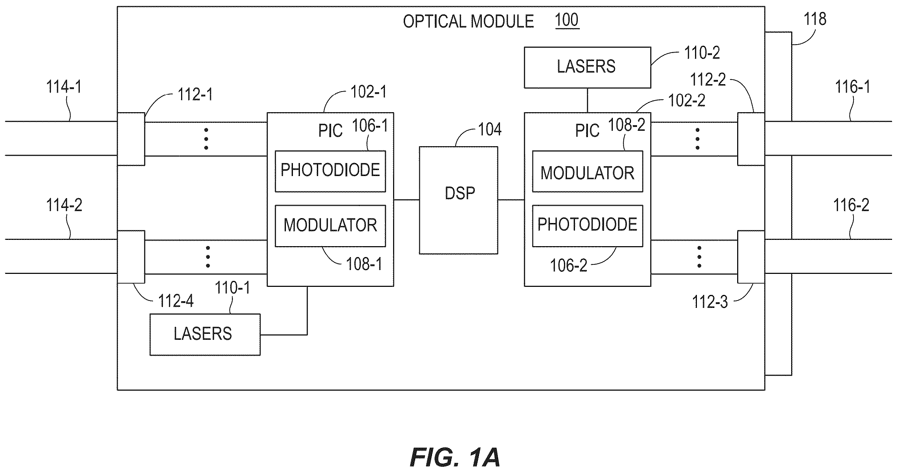

Figure 1A depicts an optical module 100 that includes PICs 102-1 and 102-2, a DSP 104, and an electrical connector 118. Each of the PICs 102-1 and 102-2 includes a photodiode 106-1 and 106-2, respectively, and a modulator 108-1 and 108-2, respectively. The photodiodes 106-1 and 106-2 may convert an optical signal into electrical signals. The modulators 108-1 and 108-2 may modulate lasers 110-1 and 110-2, respectively, to generate an optical signal from electrical signals. The lasers 110-1 and 110-2 in Figure 1A include one or more lasers, which may be fixed, tunable or other suitable types of lasers based on the modulation schemes of optical signals entering or leaving the optical module 100. The number of lasers in the lasers 110-1 and 110-2 may vary based on the modulation scheme for the modulators 108-1 and 108-2. For example, the lasers 110-1 may include four lasers if the modulator 108-1 is set to a PAM-4 modulation scheme, while the lasers 110-2 may include one laser if the modulator 108-2 is set to a Quadrature Phase Shift Keying (QPSK) modulation scheme. The DSP 104 may receive the electrical signals from the photodiodes 106-1 or 106-2 and modify the electrical signals into new electrical signals by amplifying the magnitude of the signals, changing the shape of the signals, changing the timing of the signals, or modifying grouping of bits represented by the first electrical signals. The DSP 104 may use the modified electrical signals to drive the modulator 108-1 or 108-2 to generate an optical signal. The electrical connector 118 provides power from a power supply to the optical module 100. For example, the right side of the optical module 100 may be disposed in, or face, the inside of a computing device in which the optical module 100 is inserted, while the left side of the optical module 100 may be disposed on an external surface of the computing device.

The optical module 100 may receive a first optical signal from a first location (such as a data center or an organization's building) from an optical fiber 114-1 that is connected to an optical connection port 112-1. The first optical signal may be a combination of optical signals as indicated by the ellipses between the optical connection port 112-1 and the PIC 102-1. Similarly, the other ellipses in Figure 1A indicate optical signals that are entering or leaving the optical module 100 may be a combination of optical signals. The first optical signal is transmitted from the first optical connection port 112-1 to the PIC 102-1 such that the photodiode 106-1 may convert the first optical signal into first electrical signals. In one embodiment, the first optical signal has a first modulation scheme (such as Pulse Position Modulation (PPM)). The PIC 102-1 may transmit the first electrical signals to the DSP 104, so that the first electrical signals may be modified to second electrical signals. In one embodiment, the DSP 104 modifies the first electrical signals such that the first electrical signals are converted into the second electrical signals by reamplifying, reshaping, retiming the first electrical signals, or modifying grouping of bits represented by the first electrical signals. The DSP 104 may use the second electrical signals with a second modulation scheme (such as Differential Phase Shift Keying (DPSK)) to drive the modulator 108-2 such that the modulator 108-2 modulates the lasers 110-2 to generate a second optical signal with the second modulation scheme that is based on the second electrical signals. In one embodiment, the second modulation scheme is different from the first modulation scheme. The second optical signal with the second modulation scheme may be transmitted out of the optical module 100 through an optical connection port 112-2 that is connected to an optical fiber 116-1. The optical fiber 116-1 may be connected to a second location (such as another data center or another organization's building). In certain advantageous configurations, an optical connection port (e.g., optical connection ports 112-2 or 112-3) are designated for client optics and are positioned on the same side of the optical module as the electrical connector 118. This arrangement can optimize space utilization and simplify system integration by consolidating electrical and client optical interfaces on a single side of the module when inserted into a host system.

The optical module 100 may receive a third optical signal with a third modulation scheme (such as DPSK) that is transmitted from an optical fiber 116-2 that is connected to the second location. The optical fiber 116-2 transmits the third optical signal to the optical module 100 through an optical connection port 112-3. The third optical signal may be transmitted to the photodiode 106-2 to be converted into third electrical signals. The photodiode 106-2 may transmit the third electrical signals to the DSP 104 to modify the third electrical signals into fourth electrical signals such that the fourth electrical signals may be used to generate a fourth optical signal with a fourth modulation scheme (such as PPM). The DSP 104 may use the fourth electrical signals to drive the modulator 108-1 such that the modulator 108-1 modulates the lasers 110-1 to generate the fourth optical signal with the fourth modulation scheme. The modulator 108-1 transmits the fourth optical signal to an optical connection port 112-4 and out of the optical module 100 through an optical fiber 114-2 that is connected to the optical connection port 112-4. The fourth optical signal may be transmitted through the optical fiber 114-2 to the first location.

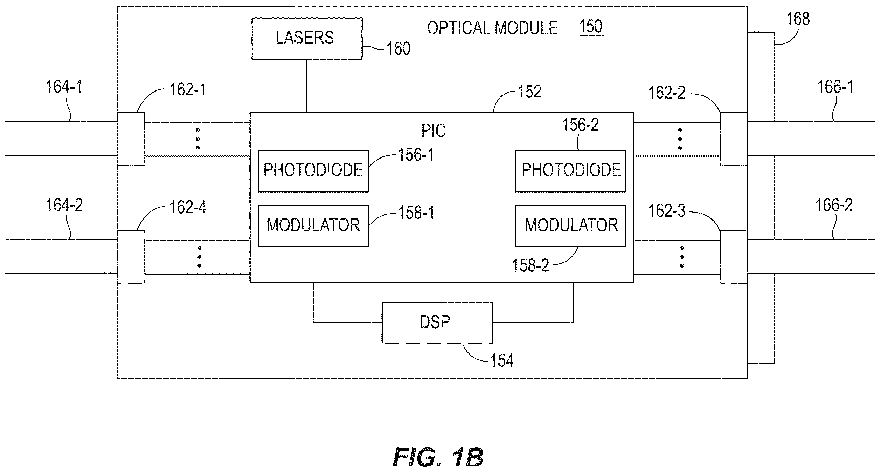

Figure 1B depicts an optical module 150 that includes a PIC 152, a DSP 154, and an electrical connector 168. The optical module 150 includes optical connection ports 162-1 through 162-4 that allow for optical signals to enter or leave the optical module 150. The optical connection ports 162-1 and 162-4 are on a first side of the optical module 150 while the optical connection ports 162-2 and 162-3 are on a second side of the optical module 150 that is opposite the first side. Unlike the optical module 100 that is depicted in Figure 1A, the PIC 152 includes multiple photodiodes 156-1 and 156-2 and multiple modulators 158-1 and 158-2. The photodiodes 156-1 and 156-2 along with the modulators 158-1 and 158-2 function similarly to the photodiodes 106-1 and 106-2, the modulators 108-1 and 108-2, respectively. For example, the optical module 150 may receive a first optical signal with a first modulation scheme (such as PAM-4) from a first location through an optical fiber 164-1 that is connected to the optical connection port 162-1. The first optical signal may be transmitted to the photodiode 156-1 to be converted into first electrical signals. The first electrical signals may be transmitted to the DSP 154 to be modified into second electrical signals such that the second electrical signals may be used to generate a second optical signal with a second modulation scheme (such as DPSK). The first modulation scheme may be different from the second modulation scheme. The DSP 154 may use the second electrical signals to drive the modulator 158-2 such that the modulator 158-2 modulates lasers 160 to generate the second optical signal with the second modulation scheme. The second optical signal with the second modulation scheme may be transmitted out of the optical module 150 through an optical fiber 166-1 that is connected to the optical connection port 162-2.

In another example, the optical module 150 may receive a third optical signal with a third modulation scheme from the second location through an optical fiber 166-2 that is connected to the optical connection port 162-3. The third optical signal may be transmitted to the photodiode 156-2 to be converted into third electrical signals. The third electrical signals may be transmitted to the DSP 154 to be modified into fourth electrical signals such that the fourth electrical signals may be used to generate a fourth optical signal with a fourth modulation scheme. The DSP 154 may use the fourth electrical signals to drive the modulator 158-1 such that the modulator 158-1 modulates the lasers 160 to generate the fourth optical signal with the fourth modulation scheme. The fourth optical signal may be transmitted out of the optical module 150 through an optical fiber 164-2 that is connected to the optical connection port 162-4. The third modulation scheme may be different from the fourth modulation scheme, but the third modulation scheme may be the same as the second modulation scheme, and the fourth modulation scheme may be the same as the first modulation scheme.

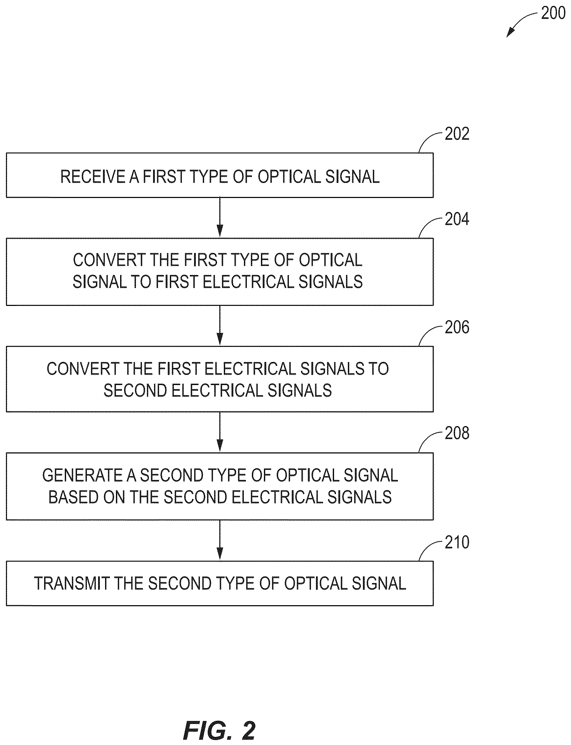

Figure 2 depicts a flowchart of an exemplary method 200 for converting a first optical signal with a first modulation scheme to a second optical signal with a second modulation scheme, according to one embodiment. At block 202, an optical module (such as the optical module 100 depicted in Figure 1A) receives a first optical signal through a first optical connection port (such as the optical connection ports 112-1 through 112-4 depicted in Figure 1A) that is connected to an optical fiber (such as the optical fibers 114-1 through 114-4 depicted in Figure 1A). The first optical signal may be a first type of modulation scheme (such as PAM-4). The first optical signal may be transmitted to a PIC in the optical module (such as the PICs 102-1 or 102-2, depicted in Figure 1A) with a photodiode (such as the photodiodes 106-1 or 106-2 depicted in Figure 1A). At block 204, the photodiode converts the first optical signal into first electrical signals.

The first electrical signal may be transmitted to a DSP in the optical module (such as the DSP 104 depicted in Figure 1A) to be modified. At block 206, the DSP converts the first electrical signals into second electrical signals. The DSP may convert the first electrical signals into the second electrical signals by amplifying the magnitude of the signals, changing the shape of the signals, changing the timing of the signals, or generating electrical signals for modulating an optical signal using a modulation scheme that is different from the first modulation scheme. The DSP may use the second electrical signals to drive a modulator (such as the modulator 108-1 or 108-2 depicted in Figure 1A) and the modulator may modulate a laser (such as the laser 110-1 or 110-2 depicted in Figure 1A) such that, at block 208, the modulator and the laser generate a second optical signal with a second type of modulation scheme (such as 16-QAM) based on the second electrical signal. In one embodiment, the modulator modulates multiple lasers with the second electrical signals. In one embodiment, the DSP transmits the second electrical signals to multiple modulators that each modulate a different laser.

At block 210, the optical module transmits the second optical signal out of the optical module. The optical module may transmit the second optical signal through a second optical connection port that is on the opposite side of the optical module from the first optical connection port. By having the second optical connection port and the first optical connection port on opposite sides of the optical module, optical signals that enter the optical module through the first optical connection port may be converted from one modulation scheme (such as PPM) to a different modulation scheme (such as QPSK) without leaving the optical module. After the optical signals are converted, the converted optical signals may be transmitted out the second optical connection port without going back to the first optical connection port, thereby contributing to improved power efficiency.

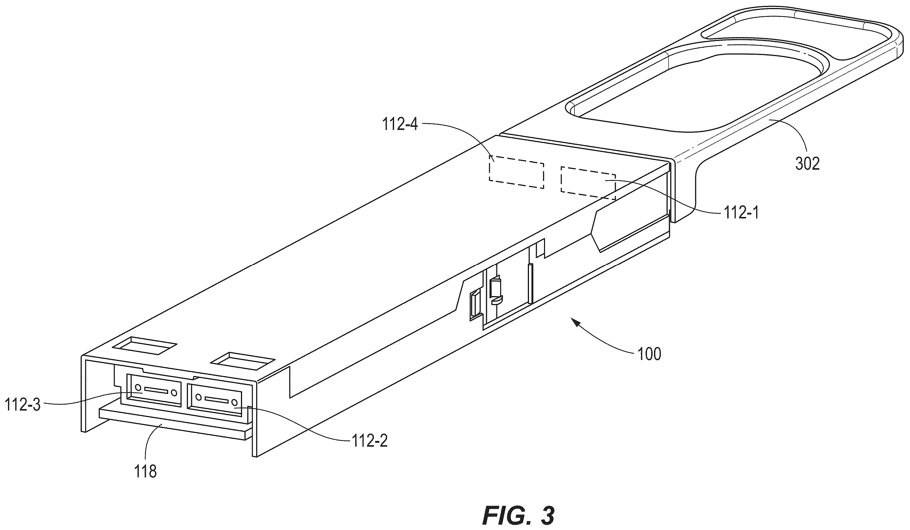

Figure 3 depicts a diagram of the optical module 100 with the optical connection ports 112-1 through 112-4. The dashed lines depicted in Figure 3 indicate the position of the optical connection ports 112-1 and 112-4 at one end of the optical module 100. In addition to the optical module 100 described in Figure 1, the optical module 100 includes a tab 302 to facilitate insertion and removal from a host system. The optical module 100 may be inserted into a rack such that the side of the optical module 100 with the electrical connector 118 and the optical connection ports 112-2 and 112-3 is inserted into the rack. The opposite side with the tab 302 and the optical connection ports 112-1 and 112-4 extends outward, away from the rack. The tab 302 allows an administrator to remove the optical module 100 from a rack with a reduced risk of damaging its hardware components. The administrator may remove the optical module 100 from the rack and install another optical module that is similar to the optical module 100 with PICs (such as the PICs 102-1 or 102-2 depicted in Figure 1) that have a different modulation scheme. In one embodiment, a tab similar to the tab 302 extends from a side of the optical module 150.

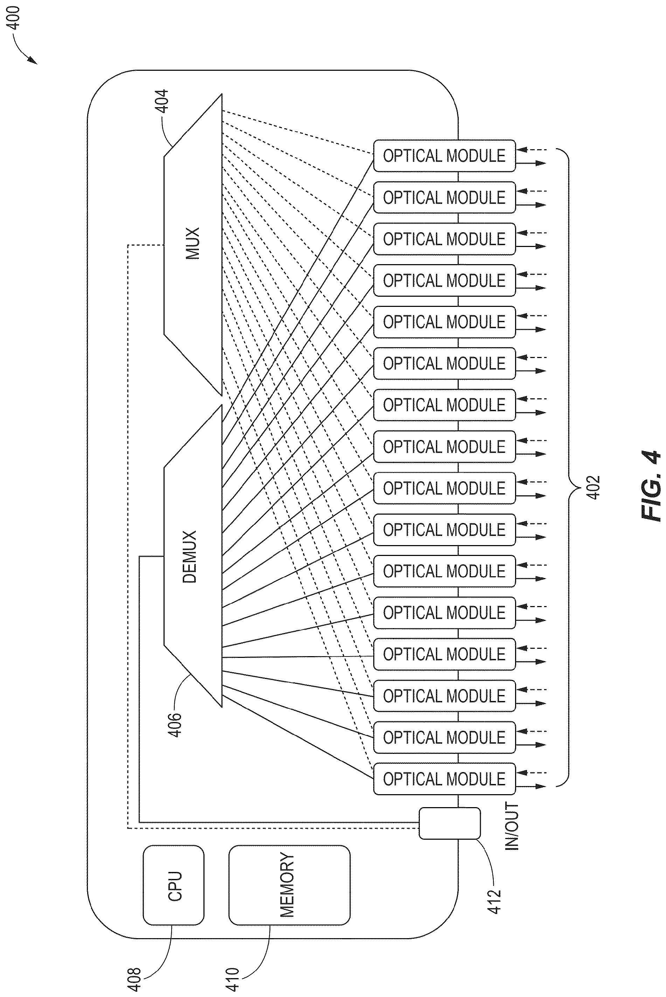

Figure 4 depicts a diagram of a chassis 400 that includes multiple optical modules 402 (such as the optical module 100 or 150 depicted in Figures 1A and 1B, respectively) that receive and transmit optical signals. The chassis 400 may include a MUX 404, a DEMUX 406, central processing unit (CPU) 408, and a memory 410. The MUX 404 receives optical signals from each of the multiple optical modules 402 and combines the received optical signals into one combined optical signal. The MUX 404 may transmit the combined optical signal from the chassis 400 through an I/O port 412. The DEMUX 406 may receive an optical signal from the I/O port 412 that has multiple signals (with different wavelengths or channels) and split the optical signal into multiple optical signals. The DEMUX 406 may transmit respective one of the multiple optical signals to each one of the multiple optical modules 402. The CPU 408 may control the transmission and reception of optical signals by the chassis 400. The memory 410 may track the types of optical signals that are transmitted or received by the chassis 400 and any errors that occur with the optical signals. For example, the memory 410 may detect an error in an optical signal being transmitted from the chassis 400 due to one of the multiple optical modules 402 having the wrong modulation type. Consequently, the optical signal from the MUX 404 would be incorrect. An administrator may access the memory to determine a solution for detected errors. Using the previous example, the administrator may determine that the solution for the error is to remove the optical module 402 with the incorrect modulator and install a different optical module 402 with the correct modulator. Each of the optical modules 402 may include each of the components depicted in Figure 1A or 1B. In a particular embodiment, the chassis 400 may represent an optical transponder system. Within such a system, the plurality of optical modules 402, acting as media converters, are configured to be plugged into an optical transponder line card. This configuration allows the modules to receive power and controller connections. A key advantage of the dual-sided optical connections is that both line and client optical connections can be made directly from the system's faceplate into the media converters, significantly simplifying installation, cabling management, and maintenance procedures.

In the current disclosure, reference is made to various embodiments. However, the scope of the present disclosure is not limited to specific described embodiments. Instead, any combination of the described features and elements, whether related to different embodiments or not, is contemplated to implement and practice contemplated embodiments. Additionally, when elements of the embodiments are described in the form of "at least one of A and B," or "at least one of A or B," it will be understood that embodiments including element A exclusively, including element B exclusively, and including element A and B are each contemplated. Furthermore, although some embodiments disclosed herein may achieve advantages over other possible solutions or over the prior art, whether or not a particular advantage is achieved by a given embodiment is not limiting of the scope of the present disclosure. Thus, the aspects, features, embodiments and advantages disclosed herein are merely illustrative and are not considered elements or limitations of the appended claims except where explicitly recited in a claim(s). Likewise, reference to "the invention" shall not be construed as a generalization of any inventive subject matter disclosed herein and shall not be considered to be an element or limitation of the appended claims except where explicitly recited in a claim(s).

In view of the foregoing, the scope of the present disclosure is determined by the claims that follow.

## Claims

1. An optical module comprising:
a first optical connection port, on a first side of the optical module, configured to receive a first optical signal with a first modulation scheme;
a photodiode configured to convert the first optical signal into first electrical signals;
a digital signal processor (DSP) configured to convert the first electrical signals into second electrical signals for a second optical signal, wherein the second optical signal has a second modulation scheme different from the first modulation scheme;
a modulator configured to generate the second optical signal based on the second electrical signals; and
a second optical connection port, on a second side of the optical module, configured to transmit the second optical signal, wherein the first side of the optical module is opposite the second side of the optical module.

2. The optical module of claim 1, further comprising:
a first photonic integrated circuit (PIC) comprising the photodiode, wherein the photodiode receives the first optical signal; and
a second PIC comprising the modulator, wherein the modulator receives the second electrical signals,
optionally further comprising a tunable laser configured to generate the second optical signal with the modulator.

3. The optical module of any preceding claim, further comprising:
a third optical connection port, on the second side of the optical module, configured to receive a third optical signal with a third modulation scheme, wherein the third optical signal is transmitted to a second photodiode, wherein the second photodiode is configured to generate third electrical signals based on the third optical signal;
wherein the DSP is configured to convert the third electrical signals into fourth electrical signals for a fourth optical signal with a fourth modulation scheme;
a second modulator configured to generate the fourth optical signal based on the fourth electrical signals from the DSP; and
a fourth optical connection port, on the first side of the optical module, configured to transmit the fourth optical signal,
optionally wherein the third modulation scheme is different from the fourth modulation scheme, wherein the third modulation scheme is the same as the second modulation scheme, and wherein the fourth modulation scheme is the same as the first modulation scheme.

4. The optical module of any preceding claim, further comprising an electric connector disposed on the first side or the second side of the optical module and wherein the electric connector is configured to receive power from a power supply.

5. The optical module of any preceding claim, wherein the photodiode and the modulator are on a PIC, wherein the photodiode is configured to receive the first optical signal from the first optical connection port, and wherein the modulator is configured to receive the second electrical signals from the DSP.

6. A chassis comprising:
a plurality of optical modules, wherein each of the optical modules are configured to:
receive a first optical signal with a first modulation scheme through a first optical connection port on the optical module on a first side of the optical module;
convert the first optical signal into first electrical signals;
convert the first electrical signals into second electrical signals for a second optical signal with a second modulation scheme, wherein the first modulation scheme is different from the second modulation scheme;
generate the second optical signal based on the second electrical signals; and
transmit the second optical signal through a second optical connection port, on a second side of the optical module, wherein the first side of the optical module is opposite the second side of the optical module.

7. The chassis of claim 6, wherein the second optical signal transmitted from each of the plurality of optical modules is a different wavelength.

8. The chassis of claim 6 or 7, wherein each of the plurality of optical modules comprises:
a first PIC comprising a photodiode configured to receive the first optical signal; and
a second PIC comprising a modulator configured to receive the second electrical signals,
optionally wherein each of the plurality of optical modules further comprises a tunable laser configured to generate the second optical signal with the modulator.

9. The chassis of any of claims 6 to 8, wherein each of the plurality of optical modules comprises a PIC comprising a photodiode and a modulator, wherein the photodiode is configured to receive the first optical signal, and wherein the modulator is configured to receive the second electrical signals from a DSP.

10. The chassis of claim 9, wherein each of the plurality of optical modules are further configured to:
receive a third optical signal with a third modulation scheme from a third optical connection port on the second side of the optical module, wherein the third optical signal is transmitted to a second photodiode on the optical module, wherein the second photodiode is configured to generate third electrical signals based on the third optical signal;
wherein the DSP is configured to convert the third electrical signals into fourth electrical signals for a fourth optical signal with a fourth modulation scheme, wherein the third modulation scheme is different from the fourth modulation scheme, wherein the third modulation scheme is the same as the second modulation scheme, and wherein the fourth modulation scheme is the same as the first modulation scheme;
generate, by a second modulator, the fourth optical signal based on the fourth electrical signals from the DSP; and
transmit the fourth optical signal through a fourth optical connection port on the first side of the optical module,
optionally further comprising:
a multiplexer (MUX) configured to combine the second optical signal from each of the plurality of optical modules into a first combined optical signal;
a demultiplexer (DEMUX) configured to transmit the third optical signal to each of the plurality of optical modules based on a second combined optical signal; and
an input/output (I/O) port configured to receive the first combined optical signal from the MUX and transmit the second combined optical signal to the DEMUX.

11. The chassis of any of claims 6 to 10, wherein each of the plurality of optical modules comprises an electric connector configured to receive power from a power supply.

12. A method comprising:
receiving, on a first side of an optical module, a first optical signal with a first modulation scheme;
converting the first optical signal into first electrical signals;
converting the first electrical signals into second electrical signals for a second optical signal, wherein the second optical signal has a second modulation scheme that is different from the first modulation scheme;
generating the second optical signal based on the second electrical signals; and
transmitting the second optical signal from a second side of the optical module, wherein the second side of the optical module is opposite the first side of the optical module.

13. The method of claim 12, wherein the method further comprises:
receiving, on the second side of the optical module, a third optical signal with a third modulation scheme;
generating third electrical signals based on the third optical signal;
converting the third electrical signals into fourth electrical signals for a fourth optical signal with a fourth modulation scheme that is different from the third modulation scheme;
generating the fourth optical signal based on the fourth electrical signals; and
transmitting the fourth optical signal through the first side of the optical module.

14. The method of any of claims 12 to 13, further comprises adjusting a tunable laser based on the second modulation scheme, wherein generating the second optical signal comprises using the adjusted tunable laser.

15. The method of any of claims 12 to 14, wherein the method further comprises:
receiving, on a second optical module, a third optical signal with the first modulation scheme;
converting the third optical signal into third electrical signals;
converting the third electrical signals into fourth electrical signals for a fourth optical signal with the second modulation scheme;
generating the fourth optical signal based on the fourth electrical signals; and
transmitting the fourth optical signal from the second optical module, wherein the second optical signal is a different wavelength from the fourth optical signal,
optionally wherein the method further comprises:
prior to receiving the first optical signal on the optical module or the third optical signal on the second optical module, splitting a first combined optical signal into the first optical signal and the third optical signal;
combining the second optical signal and the fourth optical signal into a second combined optical signal; and
transmitting the second combined optical signal.
